(19) **Europäisches Patentamt / European Patent Office / Office européen des brevets**

(11) **EP 2 991 142 B1**

(12) **EUROPEAN PATENT SPECIFICATION**

(45) Date of publication and mention of the grant of the patent:
**03.05.2017 Bulletin 2017/18**

(51) Int Cl.:
*H01M 4/86* *(2006.01)*  *B01J 23/42* *(2006.01)*
*B01J 35/10* *(2006.01)*  *H01M 4/92* *(2006.01)*
*H01M 8/10* *(2016.01)*

(21) Application number: **14787651.0**

(22) Date of filing: **14.04.2014**

(86) International application number:
**PCT/JP2014/060638**

(87) International publication number:
**WO 2014/175100 (30.10.2014 Gazette 2014/44)**

(54) **CATALYST, ELECTRODE CATALYST LAYER USING SAID CATALYST, MEMBRANE ELECTRODE ASSEMBLY, AND FUEL CELL**

KATALYSATOR, ELEKTRODENKATALYSATORSCHICHT UNTER VERWENDUNG DIESES KATALYSATORS, MEMBRANELEKTRODENANORDNUNG UND BRENNSTOFFZELLE

CATALYSEUR, COUCHE DE CATALYSEUR POUR ÉLECTRODE AYANT RECOURS AUDIT CATALYSEUR, ASSEMBLAGE MEMBRANE-ÉLECTRODES ET PILE À COMBUSTILE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.04.2013 JP 2013092923**

(43) Date of publication of application:
**02.03.2016 Bulletin 2016/09**

(73) Proprietors:
• **NISSAN MOTOR CO., LTD.**
**Yokohama-shi, Kanagawa 220-8623 (JP)**
• **Nippon Steel & Sumikin Chemical Co., Ltd.**
**Chiyoda-ku**
**Tokyo 101-0021 (JP)**

(72) Inventors:
• **MASHIO, Tetsuya**
**Atsugi-shi**
**Kanagawa 243-0123 (JP)**

• **OHMA, Atsushi**
**Atsugi-shi**
**Kanagawa 243-0123 (JP)**
• **TAKAHASHI, Shinichi**
**Atsugi-shi**
**Kanagawa 243-0123 (JP)**
• **AKIZUKI, Ken**
**Atsugi-shi**
**Kanagawa 243-0123 (JP)**

(74) Representative: **Grünecker Patent- und Rechtsanwälte**
**PartG mbB**
**Leopoldstraße 4**
**80802 München (DE)**

(56) References cited:
WO-A1-2012/053638    JP-A- 2003 201 417
JP-A- 2004 217 507    JP-A- 2005 135 817
JP-A- 2006 155 921    JP-A- 2006 156 154
JP-A- 2007 220 384    JP-A- 2008 269 850
US-A1- 2006 093 893

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Technical Field

The present invention relates to a catalyst, and particularly, to an electrode catalyst used for a fuel cell (PEFC) and an electrode catalyst layer, a membrane electrode assembly, and a fuel cell using the catalyst.

Background Art

A polymer electrolyte fuel cell using a proton conductive solid polymer membrane operates at a low temperature in comparison to other types of fuel cells, for example, a solid oxide fuel cell or a molten carbonate fuel cell. For this reason, the polymer electrolyte fuel cell has been expected to be used as a power source for energy storage system or a driving power source for a vehicle such as a car, and practical uses thereof have been started.

In general, such a polymer electrolyte fuel cell uses expensive metal catalyst represented by platinum (Pt) or a Pt alloy, which leads to high cost of the fuel cell. Therefore, development of techniques capable of lowering the cost of the fuel cell by reducing a used amount of noble metal catalyst has been required.

For example, JP-A-2007-250274 (US 2009/0047559 A1) discloses an electrode catalyst having catalyst metal particles supported on a conductive support, wherein an average particle diameter of the catalyst metal particles is larger than an average pore diameter of fine pores of the conductive supports. It discloses that, according to the above-described configuration, the catalyst metal particles are not allowed to enter the fine pores of the supports, so as to increase a ratio of the catalyst metal particles used in a three phase boundary, and thus, to improve use efficiency of expensive noble metal. Further electrode catalysts having catalyst metal particles supported on a conductive support are disclosed in JP-A-2005-135817, JP-A-2007-220384, JP-A-2008-269850 and US 2006/093893 A1.

Summary of Invention

However, in a catalyst layer including the catalyst disclosed in JP-A-2007-250274 (US 2009/0047559 A1), since the contact ratio between the catalyst metal particles and the electrolyte is increased, the specific surface area is decreased, and thus, the catalyst activity is decreased.

The present invention has been made in light of the aforementioned circumstances and aims at providing a catalyst having an excellent catalytic activity.

Another object of the present invention is to provide an electrode catalyst layer, a membrane electrode assembly, and a fuel cell having an excellent power generation performance.

The present inventors had studied hard in order to solve the aforementioned problems and found out that the problems was able to be solved by a catalyst where catalyst metals supported inside pores of the catalyst and a mode radius of the pores was smaller than an average particle radius of the catalyst metals, so that the present invention was completed.

Brief Description of Drawings

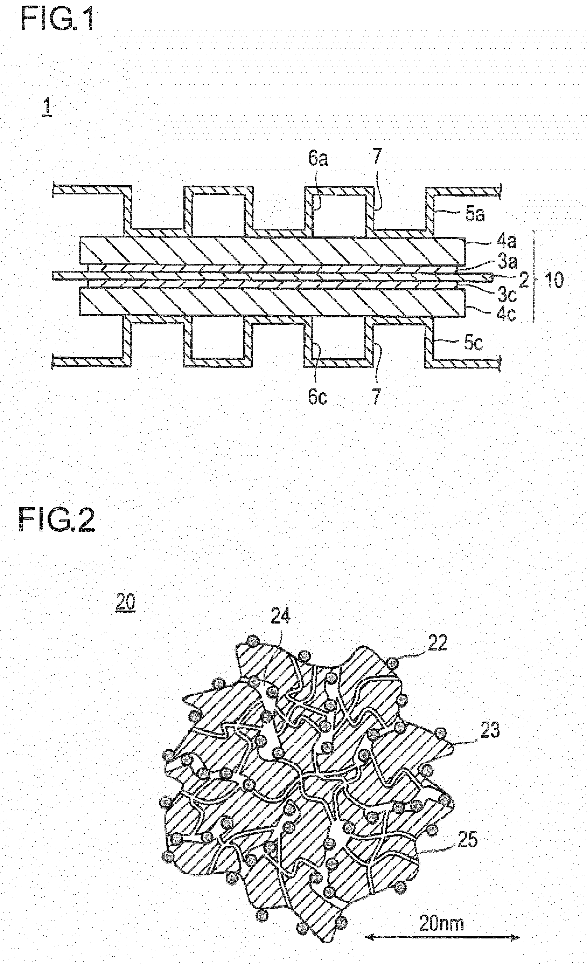

Fig. 1 is a schematic cross-sectional diagram illustrating a basic configuration of a solid polymer electrolyte fuel cell according to an embodiment of the present invention. In Fig. 1, 1 denotes a solid polymer electrolyte fuel cell (PEFC), 2 denotes a solid polymer electrolyte membrane, 3a denotes an anode catalyst layer, 3c denotes cathode catalyst layer, 4a denotes an anode gas diffusion layer, 4c denotes a cathode gas diffusion layer, 5a denotes an anode separator, 5c denotes a cathode separator, 6a denotes an anode gas passage, 6c denotes a cathode gas passage, 7 denotes a coolant passage, and 10 denotes a membrane electrode assembly (MEA) .
Fig. 2 is a schematic cross-sectional explanation diagram illustrating a shape and a structure of a catalyst according to the present invention. In Fig. 2, 20 denotes a catalyst, 22 denotes a catalyst metal, 23 denotes a support, 24 denotes a mesopore, 25 denotes a micropore, and 26 denotes an electrolyte.
Fig. 3 is a schematic diagram illustrating a relationship between a catalyst and an electrolyte in a catalyst layer according to an embodiment of the present invention. In Fig. 3, 22 denotes a catalyst metal, 23 denotes a support, 24 denotes a mesopore, and 25 denotes a micropore.
Fig. 4 is a graph illustrating a pore radius distribution of the support B used in Comparative Example 1.

Description of Embodiments

A catalyst (in this specification, sometimes referred to as an "electrode catalyst") according to the present invention is configured to include catalyst supports and catalyst metals supported on the catalyst supports. Herein, the catalyst satisfies the following configurations (a) to (d).

(a) a mode radius of pore distribution of pores of the catalyst pores having a radius of 1 nm or more is 1 nm or more and less than 5 nm;
(b) the catalyst metals are supported inside the pores of which mode radius is 1 nm or more and less than 5 nm;
(c) the mode radius is equal to or less than an average particle radius of the catalyst metals; and,
(d) a pore volume of the pores of which mode radius is 1 nm or more and less than 5 nm existing in the catalyst is 0.4 cc/g support or more.

In addition, in this specification, pores having a radius of less than 1 nm are also referred to as "micropores". In addition, in this specification, pores having a radius of 1 nm or more are also referred to as "mesopores".
The present inventors found out that in the catalyst disclosed in JP-A-2007-250274 (US 2009/0047559 A1), since the electrolyte (electrolyte polymer) was easily adsorbed on the surface of the catalyst in comparison with the gas such as oxygen, if the catalyst metals were in contact with the electrolyte (electrolyte polymer), the reaction active area of the surface of the catalyst was decreased. On the contrary, the present inventors found out that, even in the case where the catalyst was not in contact with the electrolyte, a three-phase boundary with water was formed, so that the catalyst could be effectively used. Therefore, the catalytic activity can be improved by taking the configuration where the catalyst metals are supported inside the pores (mesopores) which the electrolyte cannot enter.
On the other hand, in the case where the catalyst metals are supported inside the pores (mesopores) which the electrolyte cannot enter, a distance between the catalyst metals and the inner wall surface of the pores of the support is relatively large, and an amount of water adsorbed on the surface of the catalyst metals is increased. Since the water functions as an oxidizing agent with respect to the catalyst metals to generate a metal oxide, the activity of the catalyst metals is decreased, so that the catalyst performance is deteriorated. On the contrary, in the above-described configuration (b), the mode radius of the pores is set to be equal to or less than the average particle radius of the catalyst metals, the distance between the catalyst metals and the inner wall surface of the pores of the support is reduced, so that a space where the water can exist is decreased, and namely, the amount of water adsorbed on the surface of the catalyst metals is decreased. In addition, the water interacts with the inner wall surface of the pores, and thus, the metal oxide forming reaction is delayed, so that the metal oxide is not easily formed. As a result, deactivation of the surface of the catalyst metals is suppressed. Therefore, the catalyst according to the present invention can exhibit a high catalytic activity, and namely, the catalyst reaction can be facilitated. For this reason, the membrane electrode assembly and fuel cell comprising the catalyst layer using the catalyst according to the present invention have an excellent power generation performance.
Hereinafter, embodiments of a catalyst according to the present invention and embodiments of a catalyst layer, a membrane electrode assembly (MEA), and a fuel cell using the catalyst will be described in detail appropriately with reference to the drawings. In addition, in the description of the embodiments of the present invention with reference to the drawings, the same components are denoted by the same reference numerals, and redundant description is omitted.
In this description, "X to Y" representing a range denotes "X or more and Y or less", and "weight" and "mass", "wt% and "mass%", "parts by weight", and "parts by mass" are used interchangeably. Unless otherwise noted, operation and the measurement of physical properties are performed at a room temperature (20 to 25°C) and a relative humidity of 40 to 50%.

[Fuel Cell]

A fuel cell comprises a membrane electrode assembly (MEA) and a pair of separators including an anode-side separator having a fuel gas passage through which a fuel gas flows and a cathode-side separator having an oxidant gas passage through which an oxidant gas flows. The fuel cell according to the present invention has excellent durability and can exhibit a high power generation performance.
Fig. 1 is a schematic diagram illustrating a basic configuration of a polymer electrolyte fuel cell (PEFC) 1 according to an embodiment of the present invention. First, a PEFC 1 is configured to include a solid polymer electrolyte membrane 2 and a pair of catalyst layers (anode catalyst layer 3a and cathode catalyst layer 3c) interposing the solid polymer electrolyte membrane 2. A stacked body of the solid polymer electrolyte membrane 2 and the catalyst layers (3a, 3c) is sandwiched by a pair of gas diffusion layers (GDLs) (anode gas diffusion layer 4a and cathode gas diffusion layer 4c). In this manner, the solid polymer electrolyte membrane 2, a pair of the catalyst layers (3a, 3c), and a pair of gas diffusion layers (4a, 4c) in the stacked state constitute a membrane electrode assembly (MEA) 10.

In the PEFC 1, the MEA 10 is sandwiched by a pair of separators (anode separator 5a and cathode separator 5c). In Fig. 1, the separators (5a, 5c) are illustrated to be positioned at two ends of the MEA 10 illustrated. In general, in a fuel cell stack where a plurality of MEAs are stacked, the separator is also used as a separator for adjacent PEFC (not shown). In other words, MEAs in a fuel cell stack are sequentially stacked through the separator to constitute the stack. In an actual fuel cell stack, a gas sealing member is disposed between the separators (5a, 5c) and the solid polymer electrolyte membrane 2 and between the PEFC 1 and a different PEFC adjacent thereto. However, it is omitted in Fig. 1.

The separators (5a, 5c) are obtained by applying a pressing process to a thin board having a thickness of, for example, 0.5 mm or less to form a corrugating shape illustrated in Fig. 1. Convex portions of the separators 5a and 5c seen from the MEA side are in contact with the MEA 10. This secures an electrical connection with the MEA 10. Concave portions (spaces between the separator and the MEA formed by the corrugating shapes of the separators) of the separators (5a and 5c) seen from the MEA side function as a gas passage for passing a gas during the operation of the PEFC 1. Specifically, a fuel gas (for example, hydrogen) flows through a gas passage 6a of the anode separator 5a, and an oxidant gas (for example, air) flows through a gas passage 6c of the cathode separator 5c.

On the other hand, concave portions of the separators (5a, 5c) seen from the side opposite to the MEA side function as a coolant passage 7 for passing a coolant (e.g. water) for cooling the PEFC during the operation of the PEFC 1. In addition, manifolds (not shown) are typically installed in the separators. The manifold functions as a connecting means for connecting cells when the stack is configured. According to the configuration, a mechanical strength of the fuel cell stack can be secured.

In the embodiment illustrated in Fig. 1, each of the separators (5a, 5c) is formed in a corrugating shape. However, the separator is not limited to such a corrugating shape. If it can serve as a gas passage and a coolant passage, arbitrary shape such as a flat shape and a partially corrugating shape may be employed.

The fuel cell including the MEA according to the present invention as described above has excellent performance of power generation. Herein, the type of the fuel cell is not particularly limited. In the above description, the polymer electrolyte fuel cell is exemplified, but besides, an alkali fuel cell, a direct methanol fuel cell, a micro fuel cell, and the like may be exemplified. Among the fuel cells, due to a small size and capability of obtaining high density and high power, a polymer electrolyte fuel cell (PEFC) is preferred. In addition, the fuel cell is useful as a power source for energy storage system besides a power source for a vehicle such as a car where a mounting space is limited. Among the power sources, the fuel cell is particularly preferably used as a power source for a vehicle such as a car where a high output voltage is required after the stopping of operation for a relatively long time.

A fuel used for operating the fuel cell is not particularly limited. For example, hydrogen, methanol, ethanol, 1-propanol, 2-propanol, 1-butanol, secondary butanol, tertiary butanol, dimethyl ether, diethyl ether, ethylene glycol, diethylene glycol, or the like can be used. Among them, in view of capability of high output, hydrogen or methanol is preferably used.

In addition, although application use of the fuel cell is not particularly limited, the fuel cell is preferably applied to vehicles. The electrolyte membrane-electrode assembly according to the present invention has excellent power generation performance and durability, and can be downsized. Therefore, in terms of mountability on a vehicle, the fuel cell according to the present invention is particularly advantageous in the case where the fuel cell is applied to a vehicle.

Hereinafter, members constituting the fuel cell according to the present invention will be described in brief, but the scope of the present invention is not limited only to the following forms.

[Catalyst (Electrode Catalyst)]

Fig. 2 is a schematic cross-sectional diagram illustrating a shape and a structure of a catalyst according to an embodiment of the present invention. As illustrated in Fig. 2, a catalyst 20 according to the present invention is configured to include catalyst metals 22 and a catalyst support 23. The catalyst 20 has pores (mesopores) 24. The catalyst metal(s) 22 is supported inside the mesopore 24. In addition, at least a portion of the catalyst metals 22 may be supported inside the mesopore 24, and other portions thereof may be supported on the surface of the support 23. However, in terms of preventing the contact of the electrolyte with the catalyst metal, substantially all the catalyst metals 22 are preferably supported inside the mesopores 24. As used herein, the expression "substantially all the catalyst metals" is not particularly limited if an amount which can improve a sufficient catalytic activity can be attained. The amount of "substantially all the catalyst metals" is preferably 50 wt% or more (upper limit: 100 wt%), more preferably 80 wt% or more (upper limit : 100 wt%), with respect to all the catalyst metals.

The pore volume of the pores of which mode radius is 1 nm or more and less than 5 nm existing in the catalyst (of the catalyst after the supporting of the catalyst metals) is 0.4 cc/g support or more, preferably in a range of 0.45 to 3 cc/g support, more preferably in a range of 0.5 to 1.5 cc/g support. If the pore volume is within such a range, a large number of the catalyst metals can be received (supported) in the mesopores, and thus, the electrolyte and the catalyst metals in the catalyst layer are physically separated from each other (contact of the catalyst metals and the electrolyte can be more effectively suppressed and prevented). Therefore, the activity of the catalyst metals can be more effectively used. In addition, due to existence of a large number of the mesopores, the function and effect of the present invention are further remarkably exhibited, so that a catalyst reaction can be more effectively facilitated.

The mode radius (maximum frequent radius) of the pore distribution of the pores (of the catalyst after the supporting of the catalyst metals) is 1 nm or more and less than 5 nm, preferably 1 nm or more and 4 nm or less, more preferably 1 nm or more and 3 nm or less, even more preferably 1 nm or more and 2 nm or less. If the mode radius of the pore distribution is within such a range, a sufficient number of the catalyst metals can be received (supported) in the mesopores, and thus, the electrolyte and the catalyst metals in the catalyst layer are physically separated from each other (contact of the catalyst metals and the electrolyte can be more effectively suppressed and prevented). Therefore, the activity of the catalyst metals can be more effectively used. In addition, due to existence of a large volume of the pores (mesopores), the function and effect of the present invention are further remarkably exhibited, so that a catalyst reaction can be more effectively facilitated. In addition, in this specification, the mode radius of the pore distribution of the mesopores is also simply referred to as a "mode radius of the mesopores".

The BET specific surface area [BET specific surface area (m²/g support) of the catalyst per 1 g of support] (of the catalyst after the supporting of the catalyst metals) is not particularly limited, but it is preferably 1000 m²/g support or more, more preferably in a range of 1000 to 3000 m²/g support, particularly preferably in a range of 1000 to 1800 m²/g support. If the specific surface area is within such a range, a large number of the catalyst metals can be received (supported) in the mesopores. In addition, the electrolyte and the catalyst metals in the catalyst layer are physically separated from each other (contact of the catalyst metals and the electrolyte can be more effectively suppressed and prevented). Therefore, the activity of the catalyst metals can be more effectively used. In addition, due to existence of a large number of the pores (mesopores), the function and effect of the present invention are further remarkably exhibited, so that a catalyst reaction can be more effectively facilitated.

In addition, in this specification, the "BET specific surface area (m²/g support)" of the catalyst is measured by a nitrogen adsorption method. Specifically, about 0.04 to 0.07 g of the catalyst powder is accurately weighed and enclosed in a sample tube. The sample tube is preliminarily dried by a vacuum drier at 90°C for several hours, so that a sample for measurement is obtained. For the weighing, an electronic balance (AW220) produced by Shimadzu Co. , Ltd. is used. In addition, in case of a coat sheet, about 0.03 to 0.04 g of a net weight of a coat layer obtained by subtracting a weight of Teflon (registered trademark) (substrate) having the same area from a total weight of the coat sheet is used as the sample weight. Next, in the following measurement condition, the BET specific surface area is measured. In an adsorption side of adsorption and desorption isotherms, a BET plot is produced from a relative pressure (P/P0) range of about 0.00 to 0.45, and the surface area and the BET specific surface area are calculated from the slope and the intercept.

[Chem. 1]

< Measurement Conditions >

Measurement Apparatus : BELSORP 36, High - Precise Automatic Gas Adsorption Apparatus produced by BEL Japan, Inc.

Adsorption Gas : $N_2$

Dead Volume Measurement Gas : He

Adsorption Temperature : 77 K (Liquid Nitrogen Temperature)

Measurement Preparation : Vacuum Dried at 90° C for several hours (After He Purging, Set on Measurement Stage)

Measurement Mode : Adsorption Process and Desorption Process in Isotherm

Measurement Relative Pressure $P/P_0$ : about 0 to 0.99

Equilibrium Setting Time : 180 sec for 1 relative pressure

The "pore radius (nm) of the pores" denotes a radius of the pores measured by a nitrogen adsorption method (DH method). In addition, the "mode radius (nm) of a pore distribution" denotes a pore radius at a point taking a peak value (maximum frequency) in a differential pore distribution curve obtained by the nitrogen adsorption method (DH method). Herein, the upper limit of the pore radius of the pores is not particularly limited, but it is 100 nm or less.

The "pore volume of the pores" denotes a total volume of the pores existing in the catalyst and is expressed by pore volume per 1 g of support (cc/g support). The "pore volume (cc/g support) of the pores" is calculated as an area (integration value) under a differential pore distribution curve obtained according to a nitrogen adsorption method (DH method).

The "differential pore distribution" is a distribution curve obtained by plotting a pore diameter in the horizontal axis and a pore volume corresponding to the pore diameter in a catalyst in the vertical axis. Namely, when a pore volume of a catalyst obtained by a nitrogen adsorption method is denoted by V and a pore diameter is denoted by D, a value (dV/d(logD)) is obtained by dividing the differential pore volume dV by a differential logarithm d(logD) of the pore diameter. Next, a differential pore distribution curve is obtained by plotting the dV/d(logD) for an average pore diameter in each section. A differential pore volume dV denotes an increment of pore volume between measurement points.

A method for measuring a radius and a pore volume of mesopores by a nitrogen adsorption method (DH method) is not particularly limited. For example, methods disclosed in well-known literatures such as "Science of Adsorption" (second edition written by Kondo Seiichi, Ishikawa Tatsuo, and Abe Ikuo, Maruzen Co., Ltd.), "Fuel Cell Analysis Method" (compiled by Takasu Yoshio, Yoshitake Yu, and Ishihara Tatsumi of KAGAKU DOJIN), and an article by D. Dollion and G. R. Heal in J. Appl. Chem. 14, 109 (1964) may be employed. In this description, the radius and pore volume of mesopores by a nitrogen adsorption method (DH method) are a value measured by the method disclosed in the article written by D. Dollion and G. R. Heal in J. Appl. Chem. 14, 109 (1964).

The method of manufacturing the catalyst having such a specific pore distribution described above is not particularly limited, but the method disclosed in JP-A-2010-208887, WO 2009/075264, or the like is preferably used.

A material of the support is not particularly limited if pores (primary pores) having above-described pore volume or mode radius can be formed inside the support and if the support has enough specific surface area and enough electron conductivity to support a catalyst component inside the pores (mesopores) in a dispersed state. Preferably, a main component is carbon. Specifically, carbon particles made of carbon black (Ketjen Black, oil furnace black, channel black, lamp black, thermal black, acetylene black, or the like), activated charcoal, or the like may be exemplified. The expression "main component is carbon" denotes that the support contains carbon atoms as a main component, and includes both of the configurations that the support consists only of carbon atoms and that the support substantially consists of carbon atoms. An element (s) other than carbon atom may be contained. The expression "substantially consists of carbon atoms" denotes that impurities of about 2 to 3 wt% or less can be contaminated.

More preferably, since it is easy to form a desired pore space inside the support, carbon black is used, and particularly preferably, so-called mesoporous carbon having a larger number of pores having a radius of 5 nm or less is used.

Besides the aforementioned carbon materials, a porous metal such as Sn (tin) or Ti (titanium) or a conductive metal oxide can also be used as the support.

The BET specific surface area of the support may be a specific surface area enough to highly dispersively support the catalyst component. The BET specific surface area of the support is substantially equivalent to the BET specific surface area of the catalyst. The BET specific surface area of the support is preferably in a range of 1000 to 3000 m$^2$/g, more preferably in a range of 1000 to 1800 m$^2$/g. If the specific surface area is within such a range, a sufficient number of the pores (mesopores) can be secured, and thus, a large number of the catalyst metals can be received (supported) in the mesopores. In addition, the electrolyte and the catalyst metals in the catalyst layer are physically separated from each other (contact of the catalyst metals and the electrolyte can be more effectively suppressed and prevented). Therefore, the activity of the catalyst metals can be more effectively used. In addition, due to existence of a large number of the pores (mesopores), the function and effect of the present invention are further remarkably exhibited, so that a catalyst reaction can be more effectively facilitated. In addition, the balance between dispersibility of the catalyst component on the catalyst support and an effective utilization rate of the catalyst component can be appropriately controlled.

An average particle diameter of the support is preferably in the range of 20 to 2000 nm. If the average particle diameter is within such a range, even in the case where the above-described pore structure is formed in the support, mechanical strength can be maintained, and a thickness of a catalyst layer can be controlled within an appropriate range. As a value of the "average particle diameter of a support", unless otherwise noted, a value calculated as an average value of particle diameters of particles observed within several or several tens of fields by using observation means such as a scanning electron microscope (SEM) or a transmission electron microscope (TEM) is employed. In addition, the "particle diameter" denotes a maximum distance among distances between arbitrary two points on an outline of a particle.

In the present invention, there is no need to use the above-described granular porous support, so long as the support has the above-described pore distributions in the catalyst.

Namely, as the support, a non-porous conductive support, nonwoven fabric, carbon paper, carbon cloth, or the like made of carbon fiber constituting a gas diffusion layer, or the like may be exemplified. In this case, the catalyst can be supported on the non-porous conductive support or can be directly attached to the nonwoven fabric, the carbon paper, the carbon cloth, or the like made of the carbon fiber constituting the gas diffusion layer of the membrane electrode assembly.

A catalyst metal which can be used in the present invention performs catalysis of electrochemical reaction. As a catalyst metal used for an anode catalyst layer, a well-known catalyst can be used in a similar manner without particular limitation if the catalyst has catalytic effects on oxidation reaction of hydrogen. In addition, as a catalyst metal used for a cathode catalyst layer, a well-known catalyst can be used in a similar manner without particular limitation if the catalyst has catalytic effects on reduction reaction of oxygen. Specifically, the catalyst metal can be selected among metals such as platinum, ruthenium, iridium, rhodium, palladium, osmium, tungsten, lead, iron, copper, silver, chromium, cobalt, nickel, manganese, vanadium, molybdenum, gallium, and aluminum, and alloys thereof.

Among them, in view of improved catalytic activity, poison resistance to carbon monoxide or the like, heat resistance, or the like, a catalyst metal containing at least platinum is preferably used. Namely, the catalyst metal preferably is platinum or contains platinum and a metal component other than the platinum, more preferably is platinum or a platinum-containing alloy. Such a catalyst metal can exhibit high activity. Although a composition of an alloy depends on a kind of the metal constituting the alloy, a content of platinum may be in the range of 30 to 90 atom%, and a content of a metal constituting the alloy together with platinum may be in the range of 10 to 70 atom%. In general, an alloy is obtained by mixing a metal element with at least one metal element or non-metal element, and is a general term for substances having metallic properties. The structure of the alloy includes an eutectic alloy which is a mixture where component elements form separate crystals, an alloy where component elements are completely fused to form a solid solution, an alloy where component elements form a intermetallic compound or a compound between a metal and a non-metal, and the like, and any one thereof may be employed in the present application. A catalyst metal used in an anode catalyst layer and a catalyst metal used in a cathode catalyst layer can be appropriately selected from the aforementioned alloys. In this description, unless otherwise noted, the description of the catalyst metal for the anode catalyst layer and the catalyst metal for the cathode catalyst layer have the same definition. However, the catalyst metal for the anode catalyst layer and the catalyst metal for the cathode catalyst layer are not necessarily the same, and the catalyst metals can be appropriately selected so that the desired functions described above can be attained.

A shape and size of the catalyst metal (catalyst component) are not particularly limited, but the shapes and sizes of well-known catalyst components may be employed. As the shape, for example, a granular shape, a squamous shape, a laminar shape, or the like may be used, but the granular shape is preferred.

In the present invention, the average pore radius of the catalyst metals is equal to or more than the mode radius of the pore distribution (the mode radius is equal to or less than the average particle radius of the catalyst metals). In this case, the average particle radius of the catalyst metals (catalyst metal particles) is preferably 1 nm or more and 3.5 nm or less, more preferably 1.5 nm or more and 2.5 nm or less. If the average particle radius of the catalyst metals is equal to or more than the mode radius of the pore distribution (if the mode radius is equal to or less than the average particle radius of the catalyst metals), the distance between the catalyst metals and the inner wall surface of the pores of the support is reduced, so that a space where the water can exist is decreased, and namely, the amount of water adsorbed on the surface of the catalyst metals is decreased. In addition, the water interacts with the wall surface, and thus, the metal oxide forming reaction is delayed, so that the metal oxide is not easily formed. As a result, deactivation of the surface of the catalyst metals is suppressed, so that a high catalyst activity can be exhibited, and namely, the catalyst reaction can be facilitated. In addition, the catalyst metals are relatively strongly supported in the pores (mesopores), so that the contact with the electrolyte in the catalyst layer is more effectively suppressed and prevented. In addition, elution of the catalyst metals according to a change in voltage can be prevented, and temporal degradation in performance can be also suppressed. Therefore, the catalyst activity can be further improved, and namely, the catalyst reaction can be more efficiently facilitated. Meanwhile, in the present invention, the "average particle radius of the catalyst metal particles" can be measured as an average value of a crystallite radius obtained from a half-value width of a diffraction peak of the catalyst metal component in the X-ray diffraction spectroscopy or as an average value of a particle radius of the catalyst metal particles examined from a transmission electron microscope (TEM) image. In this specification, the "average particle radius of the catalyst metals" is a crystallite radius obtained from the half-value width of the diffraction peak of the catalyst metal component in the X-ray diffraction spectroscopy.

In this embodiment, a catalyst content per unit catalyst-coated area (mg/cm$^2$) is not particularly limited so long as a sufficient dispersibility of catalyst on a support and power generation performance can be obtained. For example, the catalyst content is in the range of 0.01 to 1 mg/cm$^2$. However, in the case where the catalyst contains platinum or a platinum-containing alloy, a platinum content per unit catalyst-coated area is preferably 0.5 mg/cm$^2$ or less. The usage of expensive noble metal catalyst represented by platinum (Pt) or a platinum alloy induces an increased cost of a fuel cell. Therefore, it is preferable to reduce the cost by decreasing an amount (platinum content) of the expensive platinum to the above-described range. A lower limit is not particularly limited so long as power generation performance can be attained, and for example, the lower limit value is 0. 01 mg/cm$^2$ or more. The content of the platinum is more preferably in the range of 0.02 to 0.4 mg/cm$^2$. In this embodiment, since the activity per catalyst weight can be improved by controlling the pore structure of the support, the amount of an expensive catalyst can be reduced.

In this description, an inductively coupled plasma emission spectroscopy (ICP) is used for measurement (determination) of a "content of catalyst (platinum) per unit catalyst-coated area (mg/cm$^2$)". A method of obtaining a desired "content of catalyst (platinum) per unit catalyst-coated area (mg/cm$^2$)" can be easily performed by the person skilled in the art, and the content can be adjusted by controlling a slurry composition (catalyst concentration) and a coated amount.

An supported amount (in some cases, referred to as a support ratio) of a catalyst on a support is preferably in the range of 10 to 80 wt%, more preferably in the range of 20 to 70 wt%, with respect to a total amount of the catalyst support (that is, the support and the catalyst). The supported amount within the aforementioned range is preferable in terms of sufficient dispersibility of a catalyst component on a support, improved power generation performance, economical merit, and catalytic activity per unit weight.

[Catalyst Layer]

As described above, the catalyst of the present invention can reduce gas transport resistance, so that the catalyst can exhibit a high catalytic activity and in other words, catalyst reaction can be promoted. Therefore, the catalyst of the present invention can be advantageously used for an electrode catalyst layer for fuel cell. Namely, the present invention provides an electrode catalyst layer for fuel cell including the catalyst and the electrode catalyst according to the present invention.

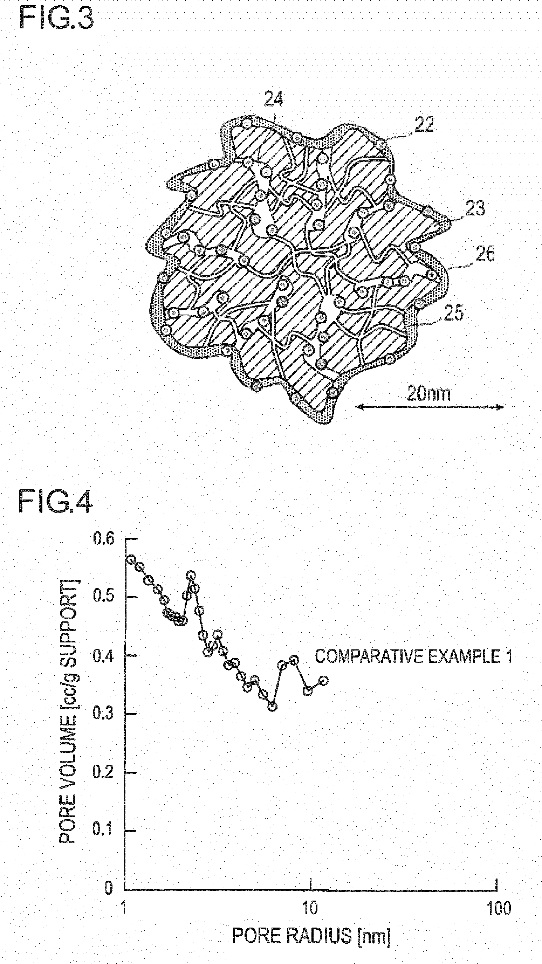

Fig. 3 is a schematic diagram illustrating a relationship between a catalyst and an electrolyte in a catalyst layer according to an embodiment of the present invention. As illustrated in Fig. 3, in the catalyst layer according to the present invention, although the catalyst is coated with the electrolyte 26, the electrolyte 26 does not enter the mesopores 24 of the catalyst (the support 23). Therefore, although the catalyst metal 22 on the surface of the support 23 is in contact with the electrolyte 26, the catalyst metal 22 supported in the mesopore 24 is not in contact with the electrolyte 26. The catalyst metal in the mesopore forms three-phase boundary with an oxygen gas and water in a state that the catalyst metal is not in contact with the electrolyte, so that a reaction active area of the catalyst metals can be secured.

Although the catalyst according to the present invention may exist either in a cathode catalyst layer or an anode catalyst layer, the catalyst is preferably used in a cathode catalyst layer. As described above, although the catalyst according to the present invention is not in contact with the electrolyte, the catalyst can be effectively used by forming three-phase boundary of the catalyst and water. This is because water is formed in the cathode catalyst layer.

An electrolyte is not particularly limited, but it is preferably an ion-conductive polymer electrolyte. Since the polymer electrolyte serves to transfer protons generated in the vicinity of the catalyst active material on a fuel electrode side, the polymer electrolyte is also referred to as a proton conductive polymer.

The polymer electrolyte is not particularly limited, but well-known knowledge in the art can be appropriately referred to. The polymer electrolytes are mainly classified into fluorine-based polymer electrolytes and hydrocarbon-based polymer electrolytes depending on a type of an ion-exchange resin as a constituent material.

As an ion-exchange resin constituting the fluorine-based polymer electrolyte, for example, perfluorocarbon sulfonic acid based polymers such as Nafion (registered trademark, produced by DuPont), Aciplex (registered trademark, produced by Asahi Kasei Co. , Ltd.), and Flemion (registered trademark, produced by Asahi Glass Co., Ltd.), perfluorocarbon phosphoric acid based polymers, trifluorostyrene sulfonic acid based polymers, ethylene tetrafluoroethylene-g-styrene sulfonic acid based polymers, ethylene-tetrafluoroethylene copolymers, polyvinylidene fluoride-perfluorocarbon sulfonic acid based polymers, and the like may be exemplified. In terms excellent heat resistance, chemical stability, durability, and mechanical strength, the fluorine-based polymer electrolyte is preferably used, and a fluorine-based polymer electrolyte formed of a perfluorocarbon sulfonic acid based polymer is particularly preferably used.

As a hydrocarbon-based electrolyte, sulfonated polyether sulfones (S-PES), sulfonated polyaryl ether ketones, sulfonated polybenzimidazole alkyls, phosphonated polybenzimidazole alkyls, sulfonated polystyrenes, sulfonated polyether ether ketones (SPEEK), sulfonated polyphenylenes (S-PPP), and the like may be exemplified. In terms of manufacturing advantages such as inexpensive raw materials, simple manufacturing processes, and high selectivity of materials, a hydrocarbon-based polymer electrolyte is preferably used. These ion-exchange resins may be singly used, or two or more resins may be used together. In addition, the material is not limited to the above-described material, but another material may be used.

With respect to the polymer electrolyte which serves to transfer protons, proton conductivity is important. In the case where EW of a polymer electrolyte is too large, ion conductivity with in the entire catalyst layer would be decreased. Therefore, the catalyst layer according to the embodiment preferably includes a polymer electrolyte having a small EW. Specifically, catalyst layer according to the embodiment preferably includes a polymer electrolyte having an EW of 1500 g/eq. or less, more preferably includes a polymer electrolyte having an EW of 1200 g/eq. or less, and particularly preferably includes a polymer electrolyte having an EW of 1000 g/eq. or less.

On the other hand, in the case where the EW is too small, since hydrophilicity is too high, water is hard to smoothly move. Due to such a point of view, the EW of polymer electrolyte is preferably 600 or more. The EW (Equivalent Weight) represents an equivalent weight of an exchange group having proton conductivity. The equivalent weight is a dry weight of an ion exchange membrane per 1 eq. of ion exchange group, and is represented in units of "g/eq.".

It is preferable that the catalyst layer includes two types or more of polymer electrolytes having different EWs in a power generation surface, and in this case, among the polymer electrolytes, the polymer electrolyte having the lowest EW is used in an area where relative humidity of a gas in a passage is 90% or less. By employing such material arrangement, resistance is decreased irrespective of a current density area, so that cell performance can be improved. The EW of polymer electrolyte used in the area where relative humidity of the gas in a passage is 90% or less, that is, EW of polymer electrolyte having the lowest EW is preferably 900 g/eq. or less. By this, the above-described effects can be further more certainly and more remarkably attained.

The polymer electrolyte having the lowest EW is preferably used in an area of which temperature is higher than an average temperature of inlet and outlet for cooling water. By this, resistance is decreased irrespective of a current density area, so that cell performance can be further improved.

In terms decreased resistance value of a fuel cell system, the polymer electrolyte having the lowest EW is preferably provided in an area within the range of 3/5 or less of the passage length from a gas supply inlet of at least one of a fuel gas and an oxidant gas.

The catalyst layer according to the embodiment may include, between the catalyst and the polymer electrolyte, a liquid proton conducting material capable of connecting the catalyst and the polymer electrolyte (solid proton conducting material) in a proton conductible state. By introducing the liquid proton conducting material, a proton transport path through the liquid proton conducting material is provided between the catalyst and the polymer electrolyte, so that protons necessary for the power generation can be efficiently transported on the surface of the catalyst. By this, availability of the catalyst is improved, and thus an amount of used catalyst can be reduced while maintaining power generation performance. The liquid proton conducting material may be interposed between the catalyst and the polymer electrolyte. The liquid proton conducting material may be disposed in pores (secondary pores) between porous supports in a catalyst layer or may be disposed in pores (micropores or mesopores: primary pores) in porous supports.

The liquid proton conducting material is not particularly limited if the material has ion conductivity and has a function of forming a proton transport path between the catalyst and the polymer electrolyte. Specifically, water, a protic ionic liquid, an aqueous solution of perchloric acid, an aqueous solution of nitric acid, an aqueous solution of formic acid, an aqueous solution of acetic acid, and the like may be exemplified.

In the case of using water as the liquid proton conducting material, the water can be introduced as the liquid proton conducting material into the catalyst layer by wetting the catalyst layer with a small amount of liquid water or a humidified gas before the start of power generation. In addition, water generated through electrochemical reaction during the operation of a fuel cell may be used as the liquid proton conducting material. Therefore, in a state where a fuel cell starts to be operated, the liquid proton conducting material is not necessarily retained. For example, a surface distance between the catalyst and the electrolyte is preferably set to be a diameter of an oxygen ion constituting a water molecule, that is, 0.28 nm or more. By maintaining such a distance, water (liquid proton conducting material) can be interposed between the catalyst and the polymer electrolyte (in the liquid conducting material retaining portion) while maintaining the non-contact state between the catalyst and the polymer electrolyte, so that a proton transport path can be secured by water therebetween.

In the case of using a material such as an ionic liquid other than water as the liquid proton conducting material, the ionic liquid, the polymer electrolyte, and the catalyst are preferably allowed to be dispersed in a solution in the preparation of a catalyst ink. However, the ionic liquid may be added at the time of coating a catalyst layer substrate with a catalyst.

In the catalyst according to the present invention, a total area of the catalyst which is in contact with the polymer electrolyte is set to be smaller than a total area of the catalyst exposed to the liquid conducting material retaining portion.

Comparison of these areas can be performed, for example, by obtaining a magnitude relationship between capacitance of an electrical double layer formed in a catalyst-polymer electrolyte interface and capacitance of an electrical double layer formed in a catalyst-liquid proton conducting material interface in a state where the liquid conducting material retaining portion is filled with the liquid proton conducting material. Namely, since capacitance of an electrical double layer is proportional to an area of an electrochemically effective interface, if the capacitance of the electrical double layer formed in the catalyst-electrolyte interface is smaller than the capacitance of the electrical double layer formed in the catalyst-liquid proton conducting material interface, a contact area of the catalyst with the electrolyte is smaller than an area thereof exposed to the liquid conducting material retaining portion.

Herein, a measuring method for capacitance of an electrical double layer formed in a catalyst-electrolyte interface and capacitance of an electrical double layer formed in a catalyst-liquid proton conducting material interface, that is, a magnitude relationship between a contact area of the catalyst with the electrolyte and a contact area of the catalyst and the liquid proton conducting material (determination method for a magnitude relationship between a contact area of the catalyst and the electrolyte and an area of the catalyst exposed to the liquid conducting material retaining portion) will be described.

Namely, in the catalyst layer according to the embodiment, the following four types of interfaces can contribute as capacitance of electrical double layer ($C_{d1}$) :

(1) catalyst-polymer electrolyte (C-S)
(2) catalyst-liquid proton conducting material (C-L)
(3) porous support-polymer electrolyte (Cr-S)
(4) porous support-liquid proton conducting material (Cr-L)

As described above, since capacitance of an electrical double layer is proportional to an area of an electrochemically effective interface, $C_{d1}$C-S (capacitance of an electrical double layer in a catalyst-polymer electrolyte interface) and $C_{d1}$C-L (capacitance of an electrical double layer in a catalyst-liquid proton conducting material interface) may be obtained. Therefore, the contribution of the four types of interfaces to capacitance of an electrical double layer ($C_{d1}$) can be identified as follows.

First, for example, under a high humidity condition such as 100% RH and under a lower humidity condition such as 10% RH or less, each capacitance of electrical double layers is measured. As a measurement method for the capacitance of electrical double layer, cyclic voltammetry, electrochemical impedance spectroscopy, or the like may be exemplified. From the comparison, the contribution of the liquid proton conducting material (in this case, "water"), that is, the above-described contributions (2) and (4) can be identified.

In addition, the contributions to capacitance of an electrical double layer can be identified by deactivating a catalyst, for example, in the case of using Pt as the catalyst, by deactivating the catalyst by supplying CO gas to an electrode to be measured to allow CO to be adsorbed on the surface of Pt. In this state, as described above, under the high humidity condition and under the low humidity condition, each capacitance of electrical double layers is measured by the same method, and from the comparison, the contributions of the catalyst, that is, the above-described contributions (1) and (2) can be identified.

By using the above-described method, all the contributions (1) to (4) described above can be identified, the capacitance of the electrical double layer in the interface between the catalyst and the polymer electrolyte and the capacitance of the electrical double layer in the interface between the catalyst and the liquid proton conducting material can be obtained.

Namely, a measurement value (A) in a highly-humidified state can be regarded as capacitance of electrical double layer formed in all the interfaces (1) to (4), and a measurement value (B) in a lowly-humidified state can be regarded as capacitance of the electrical double layer formed in the interfaces (1) and (3). In addition, a measurement value (C) in a catalyst-deactivated and highly-humidified state can be regarded as capacitance of the electrical double layer formed in the interfaces (3) and (4), and a measurement value (D) in a catalyst-deactivated and lowly-humidified state can be regarded as capacitance of the electrical double layer formed in the interface (3).

Therefore, the difference between A and C can be regarded as the capacitance of the electrical double layer formed in the interfaces (1) and (2), and the difference between B and D can be regarded as the capacitance of the electrical double layer formed in the interface (1). Next, by calculating the difference between these values, i.e., (A-C)-(B-D), the capacitance of the electrical double layer formed in the interface (2) can be obtained. In addition, a contact area of the catalyst with the polymer electrolyte or an exposed area thereof to the conducting material retaining portion can be obtained by, for example, TEM (transmission electron microscope) tomography besides the above-described method.

The covering ratio of the electrolyte on the catalyst metals is preferably 0.45 or less, more preferably 0.4 or less, even more preferably 0.3 or less (lower limit: 0). If the covering ratio of the electrolyte is within such a range described above, the catalyst activity is further improved.

The covering ratio of the electrolyte can be calculated from the capacitance of the electrical double layer, and specifically, the covering ratio can be calculated according to the method disclosed in Examples.

If necessary, the catalyst layer may contain additives of a water repellent such as polytetrafluoroethylene, polyhexafluoropropylene, and tetrafluoroethylene-hexafluoropropylene copolymer, a dispersant such as a surfactant, a thickener such as glycerin, ethylene glycol (EG), polyvinyl alcohol (PVA), and propylene glycol (PG), a pore-forming agent, or the like.

A thickness (as a dried thickness) of the catalyst layer is preferably in the range of 0.05 to 30 $\mu$m, more preferably in the range of 1 to 20 $\mu$m, even more preferably in the range of 2 to 15 $\mu$m. The thickness can be applied to both of the cathode catalyst layer and the anode catalyst layer. However, the thickness of the cathode catalyst layer and the thickness of the anode catalyst layer may be equal to or different from each other.

(Method of Manufacturing Catalyst Layer)

Hereinafter, a method for manufacturing the catalyst layer will be described as an exemplary embodiment. In addition, all the conditions for the components and the materials of the catalyst layer are as described above, and thus, the description thereof is omitted.

First, a support (in this specification, sometimes referred to as a "porous support" or a "conductive porous support") is prepared, and a pore structure is controlled by performing heat treatment on the support. Specifically, the support may be manufactured as described in the method of manufacturing the support. Therefore, pores having a specific pore distribution (the mode radius of the pore distribution is 1 nm or more and less than 5 nm) can be formed in the support. In addition, due to the heat treatment, graphitization of the support is simultaneously facilitated, so that corrosion resistance can be improved.

The condition of the heat treatment is different according to the material, and thus, the condition is appropriately determined so as to obtain a desired pore structure. In general, if the heating temperature is set to be high, the mode radius of the pore distribution has a tendency to be shifted in the direction where the pore diameter becomes large (pores radius becomes large). The heat treatment condition may be determined according to the material while checking the pore structure, and the skilled in the art can easily determine the condition. In addition, although a technique of graphitizing the support by performing the heat treatment at a high temperature is known in the art, in the heat treatment in the art, most of the pores in the support may be blocked, and thus, the control of a micro pore structure (wide, shallow primary pores) in the vicinity of the catalyst is not performed.

Next, the catalyst is supported on the porous support, so that a catalyst powder is formed. The supporting of the catalyst on the porous support can be performed by a well-known method. For example, a well-known method such as an impregnation method, a liquid phase reduction supporting method, an evaporation drying method, a colloid adsorption method, a spray pyrolysis method, or reverse micelle (micro-emulsion method) may be used.

Next, heat treatment is performed on the catalyst powder. Due to the heat treatment, the catalyst metals supported in the pores are grain-grown, and thus, the distance between the catalyst metals and the inner wall surface of the pores of the support can be reduced, so that a high catalyst activity can be obtained. The heat treatment temperature is in a range of 300 to 1200°C, preferably in a range of 500 to 1150°C, more preferably in a range of 700 to 1000°C. In addition, the thermal treatment time is preferably in a range of 0.1 to 3 hours, more preferably in a range of 0.5 to 2 hours.

Subsequently, a catalyst ink containing the catalyst powder, polymer electrolyte, and a solvent is prepared. As the solvent, there is no particular limitation. A typical solvent used for forming a catalyst layer may be similarly used. Specifically, water such as tap water, pure water, ion-exchanged water, distilled water, cyclohexanol, a lower alcohol having 1 to 4 carbons such as methanol, ethanol, n-propanol (n-propyl alcohol), isopropanol, n-butanol, sec-butanol, isobutanol, and tert-butanol, propylene glycol, benzene, toluene, xylene, or the like may be used. Besides, acetic acid butyl alcohol, dimethyl ether, ethylene glycol, or the like may be used as a solvent. These solvents may be used alone or may be used in a state of a mixture of two or more solvents.

An amount of solvent for preparing the catalyst ink is not particularly limited so long as the electrolyte can be completely dissolved. Specifically, a concentration (a solid content) of the catalyst powder and the polymer electrolyte is preferably in the range of 1 to 50 wt% in the electrode catalyst ink, more preferably in the range of about 5 to 30 wt%.

In the case of using an additive such as a water repellent, a dispersant, a thickener, and a pore-forming agent, the additive may be added to the catalyst ink. In this case, an added amount of the additive is not particularly limited so long as it does not interfere with the above-described effects by the present invention. For example, the added amount of the additive is preferably in the range of 5 to 20 wt%, with respect to the total weight of the electrode catalyst ink.

Next, a surface of a substrate is coated with the catalyst ink. A method of coating the substrate is not particularly limited, but a well-known method may be used. Specifically, a well-known method such as a spray (spray coat) method, a Gulliver printing method, a die coater method, a screen printing method, or a doctor blade method can be used.

As the substrate coated with the catalyst ink, a solid polymer electrolyte membrane (electrolyte layer) or a gas diffusion substrate (gas diffusion layer) may be used. In this case, after the catalyst layer is formed on a surface of a solid polymer electrolyte membrane (electrolyte layer) or a gas diffusion substrate (gas diffusion layer), the resultant laminate may be used as it is for manufacturing a membrane electrode assembly. Alternatively, as the substrate, a peelable substrate such as a polytetrafluoroethylene (PTFE) [Teflon (registered trademark)] sheet can be used, and after a catalyst layer is formed on the substrate, the catalyst layer portion can be peeled off from the substrate, so that the catalyst layer may be obtained.

Finally, the coat layer (film) of the catalyst ink is dried under an air ambience or under an inert gas ambience at a temperature ranging from room temperature to 150°C for a time ranging from 1 to 60 minutes. By this, the catalyst layer can be formed.

(Membrane Electrode Assembly)

According to another embodiment of the present invention, provided is a membrane electrode assembly for fuel cell which comprises a solid polymer electrolyte membrane 2, a cathode catalyst layer disposed on one side of the electrolyte membrane, an anode catalyst layer disposed on the other side of the electrolyte membrane, and a pair of gas diffusion layers (4a, 4c) interposing the electrolyte membrane 2, the anode catalyst layer 3a, and the cathode catalyst layer 3c. In the membrane electrode assembly, at least one of the cathode catalyst layer and the anode catalyst layer is the catalyst layer according to the embodiment described above.

However, by taking into consideration necessity of improved proton conductivity and improved transport characteristic (gas diffusibility) of a reaction gas (particularly, $O_2$), at least the cathode catalyst layer is preferably the catalyst layer according to the embodiment described above. However, the catalyst layer according to the embodiment is not particularly limited. The catalyst layer may be used as the anode catalyst layer or may be used as the cathode catalyst layer and the anode catalyst layer.

According to further embodiment of the present invention, provided is a fuel cell including the membrane electrode assembly according to the embodiment. Namely, according to one aspect, the present invention provides a fuel cell comprising a pair of anode separator and cathode separator interposing the membrane electrode assembly according to the embodiment.

Hereinafter, members of a PEFC 1 using the catalyst layer according to the embodiment will be described with reference to Fig. 1. However, the present invention has features with respect to the catalyst layer. Therefore, among members constituting the fuel cell, specific forms of members other than the catalyst layer may be appropriately modified with reference to well-known knowledge in the art.

(Electrolyte Membrane)

An electrolyte membrane is configured with a solid polymer electrolyte membrane 2 in the same form illustrated in, for example, Fig. 1. The solid polymer electrolyte membrane 2 serves to selectively transmit protons generated in an anode catalyst layer 3a to a cathode catalyst layer 3c in the thickness direction during the operation of the PEFC 1. In addition, the solid polymer electrolyte membrane 2 also serves as a partition wall for preventing a fuel gas supplied to an anode side from being mixed with an oxidant gas supplied to a cathode side.

An electrolyte material constituting the solid polymer electrolyte membrane 2 is not particularly limited, but well-known knowledge in the art may be appropriately referred to. For example, the fluorine-based polymer electrolyte or the hydrocarbon-based polymer electrolyte described above as the polymer electrolyte can be used. There is no need to use the polymer electrolyte which is necessarily the same as the polymer electrolyte used for the catalyst layer.

A thickness of the electrolyte layer is not particularly limited, but it may be determined by taking into consideration characteristics of the obtained fuel cell. The thickness of the electrolyte layer is typically in the range of about 5 to 300 $\mu$m. If the thickness of the electrolyte layer is within such a range, balance between strength during the film formation or durability during the use and output characteristics during the use can be appropriately controlled.

(Gas Diffusion Layer)

A gas diffusion layer (anode gas diffusion layer 4a, cathode gas diffusion layer 4c) serves to facilitate diffusion of a gas (fuel gas or oxidant gas) supplied through a gas passage (6a, 6c) of a separator to a catalyst layer (3a, 3c) and also serves as an electron conducting path.

A material constituting a substrate of the gas diffusion layers (4a, 4c) is not particularly limited, but well-known knowledge in the related art may be appropriately referred to. For example, a sheet-shaped material having conductivity and porous property such as a fabric made of carbon, a sheet-shaped paper, felt, and a nonwoven fabric may be exemplified. A thickness of the substrate may be appropriately determined by considering characteristics of the obtained gas diffusion layer. The thickness of the substrate may be in the range of about 30 to 500 $\mu$m. If the thickness of the substrate is within such a range, balance between mechanical strength and diffusibility of gas, water, and the like can be appropriately controlled.

The gas diffusion layer preferably includes a water repellent for the purpose of preventing a flooding phenomenon or the like by improving water repellent property. The water repellent is not particularly limited, but fluorine-based polymer materials such as polytetrafluoroethylene (PTFE), polyvinylidene fluoride (PVdF), polyhexafluoropropylene, and tetrafluoroethylene-hexafluoropropylene copolymer (FEP), polypropylene, polyethylene, and the like may be exemplified.

In order to further improve water repellent property, the gas diffusion layer may include a carbon particle layer (microporous layer (MPL), not shown) configured with an assembly of carbon particles including a water repellent provided at the catalyst-layer side of the substrate.

Carbon particles included in the carbon particle layer are not particularly limited, but well-known materials in the art such as carbon black, graphite, and expandable graphite may be appropriately employed. Among the materials, due to excellent electron conductivity and a large specific surface area, carbon black such as oil furnace black, channel black, lamp black, thermal black, and acetylene black can be preferably used. An average particle diameter of the carbon particles may be set to be in the range of about 10 to 100 nm. By this, high water-repellent property by a capillary force can be obtained, and contacting property with the catalyst layer can be improved.

As the water repellent used for the carbon particle layer, the above-described water repellent may be exemplified. Among the materials, due to excellent water repellent property and excellent corrosion resistance during the electrode reaction, the fluorine-based polymer material can be preferably used.

A mixing ratio of the carbon particles and the water repellent in the carbon particle layer may be set to be in the range of weight ratio of about 90:10 to 40:60 (carbon particle: water repellent) by taking into consideration balance between water repellent property and electron conductivity. Meanwhile, a thickness of the carbon particle layer is not particularly limited, but it may be appropriately determined by taking into consideration water repellent property of the obtained gas diffusion layer.

(Method of Manufacturing Membrane Electrode Assembly)

A method of manufacturing a membrane electrode assembly is not particularly limited, and a well-known method in the art may be used. For example, a method which comprises transferring a catalyst layer to a solid polymer electrolyte membrane by using a hot press, or coating a solid polymer electrolyte membrane with a catalyst layer and drying the coating, and joining the resulting laminate with gas diffusion layers, or a method which comprises coating a microporous layer (in the case of not including a microporous layer, one surface of a substrate layer) of a gas diffusion layer with a catalyst layer in advance and drying the resulting product to produce two gas diffusion electrodes (GDEs), and joining both surfaces of the solid polymer electrolyte membrane with the two gas diffusion electrodes by using a hot press can be used. The coating and joining conditions by hot press and the like may be appropriately adjusted according to a type of the polymer electrolyte (perfluorosulfonic acid-based or hydrocarbon-based) in the solid polymer electrolyte membrane or the catalyst layer.

(Separator)

In the case of configuring a fuel cell stack by connecting a plurality of unit fuel cells of polymer electrolyte fuel cells in series, a separator serves to electrically connect the cells in series. The separator also serves as a partition wall for separating a fuel gas, an oxidant gas, and a coolant from each other. In order to secure a passage thereof, as described above, gas passages and coolant passages are preferably installed in each of the separators. As a material constituting the separator, well-known materials in the art of carbon such as dense carbon graphite and a carbon plate, a metal such as a stainless steel, or the like can be employed without limitation. A thickness or size of the separator, a shape or size of the installed passages, and the like are not particularly limited, but they can be appropriately determined by taking into consideration desired output characteristics and the like of the obtained fuel cell.

A manufacturing method for the fuel cell is not particularly limited, and well-known knowledge in the art in the field of fuel cell may be appropriately referred to.

Furthermore, in order that the fuel cell can generate a desired voltage, a fuel cell stack may be formed by connecting a plurality of membrane electrode assemblies in series through a separator. A shape and the like of the fuel cell are not particularly limited, and they may be appropriately determined so as to obtain desired cell characteristics such as a voltage.

The above-described PEFC or membrane electrode assembly uses the catalyst layer having excellent power generation performance and excellent durability. Therefore, the PEFC or membrane electrode assembly shows excellent power generation performance and durability.

The PEFC according to the embodiment and the fuel cell stack using the PEFC can be mounted on a vehicle, for example, as a driving power source.

Example

The effects of the present invention will be described with reference to the following Examples and Comparative Examples. However, the scope of the present invention is not limited to the Examples.

Synthesis Example 1

A support A having a pore volume of 1.56 cc/g, a mode radius of the pores of 1.65 nm, and a BET specific surface area of 1773 $m^2$/g was manufactured. Specifically, the support A was manufactured according to the method disclosed in WO 2009/C75264 or the like.

Synthesis Example 2

As a support B, Ketjen Black EC300J (produced by Ketjen Black International Co., Ltd.) having a pore volume of 0.69 cc/g and a BET specific surface area of 790 $m^2$/g was prepared.

Synthesis Example 3

A support C having a pore volume of 2.16 cc/g, a mode radius of the pores of 2.13 nm, and a BET specific surface area of 1596 $m^2$/g was manufactured. Specifically, the support C was manufactured according to the method disclosed in JP-A-2009-35598 or the like.

(Example 1)

The support A manufactured in Synthesis Example 1 described above was used, and platinum (Pt) having an average particle radius of 1.8 nm as the catalyst metal was supported on the support so that the support ratio was 30 wt%, and thus, a catalyst powder A was obtained. Namely, 46 g of the support A is immersed into 1000 g (platinum content: 46 g) of a dinitrodiammine platinum nitric acid solution having a platinum concentration of 4.6 wt%, and after stirring, 100 mL of 100% of ethanol as a reducing agent was added. The solution was stirred and mixed at a boiling point for 7 hours, so that platinum was supported on the support A. Next, by performing filtering and drying, the catalyst powder having a support ratio of 30 wt% was obtained. After that, the resulting product was maintained under a hydrogen ambience at a temperature of 900°C for 1 hour, so that the catalyst powder A was obtained.

With respect to the catalyst powder A obtained in this manner, the pore volume of the pores and the mode radius of the pores were measured. The results are listed in the following Table 2.

The catalyst powder A manufactured above and an ionomer) dispersion liquid (Nafion (registered trademark) D2020, EW = 1100 g/mol, produced by DuPont) as the polymer electrolyte were mixed at a weight ratio of the carbon support and the ionomer of 0.9. Next, a cathode catalyst ink was prepared by adding a n-propyl alcohol solution (50%) as a solvent with a solid content (Pt + carbon support + ionomer) of 7 wt%.

Ketjen Black (particle diameter: 30 to 60 nm) was used as the support, and platinum (Pt) having an average particle diameter of 2.5 nm as the catalyst metal was supported thereon at a support ratio of 50 wt%, to obtain a catalyst powder. The catalyst powder and an ionomer dispersion liquid (Nafion (registered trademark) D2020, EW = 1100 g/mol, produced by DuPont) as the polymer electrolyte were mixed at a weight ratio of the carbon support and the ionomer of 0.9. Next, an anode catalyst ink was prepared by adding a n-propyl alcohol solution (50%) as a solvent with a solid content (Pt + carbon support + ionomer) of 7 wt%.

Next, a gasket (Teonex (registered trademark) produced by Teij in DuPont, thickness: 25 $\mu$m (adhesive layer: 10 $\mu$m)) was arranged around both surfaces of a polymer electrolyte membrane (NAFION (registered trademark) NR211 produced by DuPont Film, thickness: 25 $\mu$m). Then, an exposed portion of one surface of the polymer electrolyte membrane was coated with the catalyst ink having a size of 5 cm x 2 cm by a spray coating method. The catalyst ink was dried by maintaining the stage where the spray coating was performed at a temperature of 60°C, to obtain an electrode catalyst layer. At this time, a supported amount of platinum is 0.15 mg/cm$^2$. Next, similarly to the cathode catalyst layer, an anode catalyst layer was formed by spray coating and heat treatment on the electrolyte membrane, to obtain a membrane electrode assembly of this example.

(Comparative Example 1)

The support B prepared in Synthesis Example 2 described above was used instead of the support A, and the same processes as those of Example 1 were performed, so that a catalyst powder B was obtained. The average particle radius of platinum (Pt) of the obtained catalyst powder B was 2.25 nm. With respect to the catalyst powder B obtained in this manner, the pore volume of the pores and the mode radius of the pores were measured. The results are listed in the following Table 2. In addition, by using the same method as that of Example 1, a membrane electrode assembly of this Example was obtained.

(Comparative Example 2)

Except for using the support C manufactured in Synthesis Example 3 described above instead of the support A and not performing heat treatment under a hydrogen ambience, the same processes as those of Example 1 were performed, so that a catalyst powder C was obtained. The average particle radius of platinum (Pt) of the obtained catalyst powder C was 1.15 nm. With respect to the catalyst powder C obtained in this manner, the pore volume of the pores and the mode radius of the pores were measured. The results are listed in the following Table 2. In addition, by using the same method as that of Example 1, a membrane electrode assembly of this Example was obtained.

[Covering Ratio of Electrolyte]

With respect to the covering ratio of the electrolyte on the catalyst metals, capacitance of the electrical double layer formed in an interface between the catalyst and a solid proton conducting material and capacitance of the electrical double layer formed in an interface between the catalyst and a liquid proton conducting material were measured, and the covering ratio in the catalyst by the solid proton conducting material was calculated by the measured capacitance. Meanwhile, in the calculation of the covering ratio, a ratio of the capacitance of the electrical double layer of a low humidity state to a high humidity state was calculated, and measured values in 5% RH and 100% RH conditions as representative humidity states were used.

<Measurement of Capacitance of Electrical Double Layer>

With respect to the obtained MEA, the capacitance of the electrical double layer in the high humidity state, the low humidity state, the catalyst-deactivated high humidity state, and the catalyst-deactivated low humidity state was measured by using electrochemical impedance spectroscopy, and contact areas of the catalyst with both proton conducting materials in the electrode catalysts of both fuel cells were compared.

Meanwhile, an electrochemical measurement system HZ-3000 (produced by HoKuto Denko Co., Ltd.) and a frequency response analyzer FRA5020 (produced by NF Circuit Design Block Co. , Ltd.) were used, and measurement conditions listed in the following Table 1 were employed.

[Table 1]

| Cell Temperature | 30°C |
| --- | --- |
| Frequency Range | 20 kHz to 10 mHz |
| Amplitude | $\pm$ 10 mV |
| Maintaining Potential | 0.45 V |
| Supplied Gas (Counter Electrode/Working Electrode) | $H_2/N_2$ |
| Temperature (Counter Electrode/Working Electrode) | 5/5% RH to 100/100 RH |

First, each fuel cell was heated at 30°C by a heater, and the capacitance of the electrical double layer was measured in the state where a nitrogen gas and a hydrogen gas are supplied to working and counter electrodes which are adjusted in the humidity states listed in Table 1.

In the measurement of the capacitance of the electrical double layer, as listed in Table 1, 0.45 V is maintained, and a potential of the working electrode was allowed to be vibrated in a frequency range of 20 kHz to 10 mHz with an amplitude of $\pm$ 10 mV.

Namely, real and imaginary parts of impedance at each frequency can be obtained from responses at the time of vibration of the potential of the working electrode. Since a relationship between the imaginary part (Z") and the angular velocity $\omega$ (transformed from frequency) is expressed by the following Formula, a reciprocal of the imaginary part is arranged with respect to the minus square of the angular velocity, and by extrapolation the value when the minus square of the angular velocity is 0, the capacitance of the electrical double layer $C_{d1}$ is obtained.

[Formula 1]

$$C_{dl} = \frac{1}{\omega Z''} - \frac{1}{\omega^2 R_{ct}^2 C_{dl}}$$

The measurement was sequentially performed in the low humidity state and the high humidity state (5% RH → 10% RH → 90% RH → 100% RH condition).

Next, after the Pt catalyst was deactivated by flowing a nitrogen gas containing CO having a concentration of 1% (volume ratio) at 1 NL/minute for 15 minutes or more to the working electrode, the capacitance of the electrical double layer in the high humidity state and the capacitance of the electrical double layer in the low humidity state were measured.

Next, the capacitance of the electrical double layer formed in the catalyst-solid proton conducting material (C-S) interface and the capacitance of the electrical double layer formed in the catalyst-liquid proton conducting material (C-L) interface were calculated based on the measured values. The covering ratio of the electrolyte (solid proton conducting material) on the catalyst metals was calculated by using these values. The results are listed in Table 2.

Meanwhile, in the calculation, the measured values in 5% RH and 100% RH conditions were used as representative values of the capacitance of the electrical double layer in the low humidity state and the capacitance of the electrical double layer in the high humidity state.

[Evaluation of Power Generation Performance]

The fuel cell was maintained at 80°C, an oxygen gas of which humidity was adjusted to be 100% RH was flowed to an oxygen electrode and a hydrogen gas of which humidity was adjusted to be 100% RH was allowed to be flowed to a fuel electrode, respectively (therefore, water was introduced into the pores of the support, and the water functions as a liquid proton conducting material), electron load was set so that the current density was 1.0 A/cm$^2$, and the fuel cell was maintained for 15 minutes.

After that, until the cell voltage reached 0.9 V or more, the current density was decreased step by step. In this case, each current density was allowed to be maintained for 15 minutes, and a relationship between the current density and the potential was obtained. Next, each current density was converted to a current density per surface area of the catalyst by using an effective surface area acquired in the 100% RH condition, and each current density at 0.9 V was compared. The results are listed in the following Table 2.

[Table 2]

| | Average Particle Radius of Pt (nm) | Mode Radius (nm) | Pore Volume (cc/g) | Covering Ratio of Electrolyte | Current Density ($\mu$A/cm$^2$) |
|---|---|---|---|---|---|
| Example 1 | 1.8 | 1.6 | 0.93 | 0.12 | 925 |
| Comparative Example 1 | 2.25 | None | 0.36 | 0.49 | 581 |
| Comparative Example 2 | 1.15 | 2.1 | 1.14 | 0.35 | 389 |

It was found out from the above Table 2, that the MEA using the catalyst according to the present invention had an excellent power generation performance in comparison with a membrane electrode assembly using a catalyst outside the scope of the present invention.

Meanwhile, a pore radius distribution of the support B used in Comparative Example 1 illustrated in Fig. 4. It is found out that, in the pore radius distribution of Comparative Example 1 illustrated in Fig. 4, the pore volume had a tendency to be increased as the pore radius up to 1 nm, and thus, clear mode radius did not appear in the mesopore region (the pore radius is 1 nm or more).

## Claims

1. A catalyst comprising:

   a catalyst support; and
   a catalyst metal supported on the catalyst support,
   wherein a mode radius of pore distribution of pores having a radius of 1 nm or more of the catalyst is 1 nm or more and less than 5 nm,
   wherein the catalyst metal is supported inside the pores of which mode radius is 1 nm or more and less than 5 nm,
   wherein the mode radius is equal to or less than an average particle radius of the catalyst metal, and
   wherein a pore volume of the pores of which mode radius is 1 nm or more and less than 5 nm existing in the catalyst is 0.4 cc/g support or more.

2. The catalyst according to claim 1, wherein the mode radius is 1 nm or more and 2 nm or less.

3. The catalyst according to claim 1 or 2, wherein the average particle radius of the catalyst metals is 1.5 nm or more and 2.5 nm or less.

4. The catalyst according to any one of claims 1 to 3, wherein the catalyst metal is platinum or includes platinum and a metal component other than platinum.

5. An electrode catalyst layer for fuel cell comprising the catalyst according to any one of claims 1 to 4 and an electrolyte.

**6.** The electrode catalyst layer for fuel cell according to claim 5, further comprising a liquid proton conducting material connecting the catalyst metal in the catalyst and the electrolyte in a proton conductible state.

**7.** The electrode catalyst layer for fuel cell according to claim 5 or 6, wherein a covering ratio of the electrolyte on the catalyst metal is 0.45 or less.

**8.** A membrane electrode assembly for fuel cell comprising the electrode catalyst layer for fuel cell according to any one of claims 5 to 7.

**9.** A fuel cell comprising the membrane electrode assembly for fuel cell according to claim 8.

**10.** A method of manufacturing the catalyst set forth in any one of claims 1 to 4, comprising supporting a catalyst metal on a catalyst support to obtain a catalyst powder and then subjecting the catalyst powder to a heat treatment at a temperature in the range of 300 to 1200°C.

**Patentansprüche**

**1.** Katalysator, umfassend:

einen Katalysatorträger; und
ein auf dem Katalysatorträger aufgetragenes Katalysatormetall,
wobei ein Modenradius der Porenverteilung von Poren mit einem Radius von 1 nm oder
mehr des Katalysators 1 nm oder mehr und weniger als 5 nm beträgt,
wobei das Katalysatormetall im Inneren der Poren aufgetragen ist, deren Modenradius 1 nm oder mehr und weniger als 5 nm beträgt,
wobei der Modenradius gleich oder kleiner als ein mittlerer Teilchenradius des Katalysatormetalls ist, und
wobei ein Porenvolumen der Poren, deren Modenradius 1 nm oder mehr und weniger als 5 nm beträgt, die in dem Katalysator vorhanden sind, 0,4 cm$^3$/g Träger oder mehr beträgt.

**2.** Katalysator gemäß Anspruch 1, wobei der Modenradius 1 nm oder mehr und 2 nm oder weniger beträgt.

**3.** Katalysator gemäß Anspruch 1 oder 2, wobei der mittlere Teilchenradius der Katalysatormetalle 1,5 nm oder mehr und 2,5 nm oder weniger beträgt.

**4.** Katalysator gemäß einem der Ansprüche 1 bis 3, wobei das Katalysatormetall Platin ist oder Platin und eine andere Metallkomponente als Platin enthält.

**5.** Elektrodenkatalysatorschicht für eine Brennstoffzelle, umfassend den Katalysator gemäß einem der Ansprüche 1 bis 4 und einen Elektrolyten.

**6.** Elektrodenkatalysatorschicht für eine Brennstoffzelle gemäß Anspruch 5, außerdem umfassend ein flüssiges protonenleitendes Material, das das Katalysatormetall in dem Katalysator und den Elektrolyten in einem protonenleitfähigen Zustand verbindet.

**7.** Elektrodenkatalysatorschicht für eine Brennstoffzelle gemäß Anspruch 5 oder 6, wobei ein Bedeckungsverhältnis des Elektrolyten auf dem Katalysatormetall 0,45 oder weniger beträgt.

**8.** Membranelektrodenanordnung für eine Brennstoffzelle, umfassend die Elektrodenkatälysatorschicht für eine Brennstoffzelle gemäß einem der Ansprüche 5 bis 7.

**9.** Brennstoffzelle, umfassend die Membranelektrodenanordnung für eine Brennstoffzelle gemäß Anspruch 8.

**10.** Verfahren zum Herstellen des Katalysators, der in einem der Ansprüche 1 bis 4 angegeben ist, umfassend das Auftragen eines Katalysatormetalls auf einen Katalysatorträger, um ein Katalysatorpulver zu erhalten, und anschließend das Unterwerfen des Katalysatorpulvers einer Wärmebehandlung bei einer Temperatur im Bereich von 300 bis 1.200 °C.

**Revendications**

1. Catalyseur comprenant :

    un support de catalyseur, et
    un métal catalytique maintenu sur le support de catalyseur,
    dans lequel le rayon modal de la répartition des pores pour les pores présentant un rayon de 1 nm ou plus du catalyseur est de 1 nm ou plus et moins de 5 nm,
    dans lequel le métal catalytique est maintenu à l'intérieur des pores dont le rayon modal est de 1 nm ou plus et moins de 5 nm,
    dans lequel le rayon modal est inférieur ou égal au rayon moyen des particules du métal catalytique, et
    dans lequel le volume de pore des pores dont le rayon modal est de 1 nm ou plus et moins de 5 nm se trouvant dans le catalyseur est de 0,4 cm$^3$/g de support ou plus.

2. Catalyseur selon la revendication 1, dans lequel le rayon modal vaut 1 nm ou plus et 2 nm ou moins.

3. Catalyseur selon la revendication 1 ou la revendication 2, dans lequel le rayon moyen des particules des métaux catalytiques vaut 1,5 nm ou plus et 2,5 nm ou moins.

4. Catalyseur selon l'une quelconque des revendications 1 à 3, dans lequel le métal catalytique est du platine ou bien inclut du platine et un composant métallique différent du platine.

5. Couche de catalyseur d'électrode pour pile à combustible comprenant le catalyseur conforme à l'une quelconque des revendications 1 à 4 et un électrolyte.

6. Couche de catalyseur d'électrode pour pile à combustible selon la revendication 5, comprenant en outre un matériau liquide conducteur de protons reliant le métal catalytique dans le catalyseur et l'électrolyte dans un état de conduction de protons.

7. Couche de catalyseur d'électrode pour pile à combustible selon la revendication 5 ou la revendication 6, dans laquelle le taux de couverture de l'électrolyte sur le métal catalytique est de 0,45 ou moins.

8. Ensemble formant électrode de membrane pour pile à combustible comprenant la couche de catalyseur d'électrode pour pile à combustible conforme à l'une quelconque des revendications 5 à 7.

9. Pile à combustible comprenant l'ensemble formant électrode de membrane pour pile à combustible conforme à la revendication 8.

10. Procédé de fabrication du catalyseur décrit dans l'une quelconque des revendications 1 à 4, comprenant le maintien d'un métal catalytique sur un support de catalyseur pour obtenir une poudre de catalyseur puis l'exposition de la poudre de catalyseur à un traitement thermique sous une température située dans la plage allant de 300 à 1200 °C.

## FIG.1

## FIG.2

## FIG.3

## FIG.4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007250274 A
- US 20090047559 A1
- JP 2005135817 A
- JP 2007220384 A
- JP 2008269850 A
- US 2006093893 A1
- JP 2010208887 A
- WO 2009075264 A
- WO 2009C75264 A
- JP 2009035598 A

**Non-patent literature cited in the description**

- **KONDO SEIICHI ; ISHIKAWA TATSUO ; ABE IKUO.** Science of Adsorption. Maruzen Co., Ltd,
- **TAKASU YOSHIO ; YOSHITAKE YU ; ISHIHARA TATSUMI.** Fuel Cell Analysis Method. KAGAKU DOJIN
- **D. DOLLION ; G. R. HEAL.** *J. Appl. Chem.,* 1964, vol. 14 (109
- **D. DOLLION ; G. R. HEAL.** *J. Appl. Chem.,* 1964, vol. 14, 109